**Europäisches Patentamt**

**European Patent Office**

**Office européen des brevets**

(19)

(11) Veröffentlichungsnummer : **0 012 227**
**B1**

(12) **EUROPÄISCHE PATENTSCHRIFT**

(45) Veröffentlichungstag der Patentschrift :
**11.05.83**

(51) Int. Cl.³ : **B 60 P   1/00**, B 65 F   3/28

(21) Anmeldenummer : **79104468.8**

(22) Anmeldetag : **13.11.79**

(54) **Auflieger für Schüttguttransportfahrzeuge, insbes. LKW.**

(30) Priorität : **31.10.79 DE 2943943**
**09.12.78 DE 2853282**
**09.12.78 DE 2853229**

(43) Veröffentlichungstag der Anmeldung :
**25.06.80 Patentblatt 80/13**

(45) Bekanntmachung des Hinweises auf die Patenterteilung : **11.05.83 Patentblatt 83/19**

(84) Benannte Vertragsstaaten :
**AT BE CH FR GB IT LU NL SE**

(56) Entgegenhaltungen :
**DE A 2 538 740**
**DE A 2 609 599**
**GB A 1 369 982**
**US A 3 273 728**
**US A 3 941 260**
**US A 3 953 170**
**US A 4 162 735**

(73) Patentinhaber : **Rothalit, Bau- und Wegebaustoffe GmbH**
**Langekampstrasse 36**
**D-4690 Herne 2 (DE)**

(72) Erfinder : **Nolte, Hans**
**Fahrendelle 19**
**D-5810 Witten-Heven (DE)**

(74) Vertreter : **Herrmann-Trentepohl, Werner, Dipl.-Ing. et al**
**Schaeferstrasse 18**
**D-4690 Herne 1 (DE)**

Auflieger für Schüttguttransportfahrzeuge, insbes. Lkw

Die Erfindung betrifft einen Auflieger für Schüttguttransportfahrzeuge, insbesondere Lkw mit einem selbsttragenden, oben offenen Kastenaufbau, dessen rückwärtige Stirnwand als Schwenkklappe ausgebildet ist und einem Schubschild, der in längs den Seitenwänden des Aufbaues angeordneten Längsführungen läuft und mit Hilfe einer hydraulischen Mehrfachzylinder-Kolbenstangenanordnung angetrieben ist, die sich über ein Horizontalgelenk an dem Aufbau abstützt.

Solche Fahrzeuge sind nicht nur auf Baustellen und Halden, sondern häufig auch für den Verkehr auf öffentlichen Straßen zugelassen. Sie befördern insbesondere auch schlammige Schüttgüter, z. B. für Halden und Waschberge, für deren Transport über öffentliche Straßen besonders scharfe Auflagen für die Sicherheit und Sauberhaltung der Straßen gemacht werden. Insbesondere dürfen bei der Leerfahrt die Fahrzeuge das Straßenbauwerk nicht beschädigen. Sie sollen die bei Doppelreifen auftretenden Verschmutzungen der Fahrbahn vermeiden, welche durch die zwischen die Doppelreifen eingepreßten Bodenbestandteile verursacht werden, die beim schnellen Fahren auf öffentlichen Straßen abgeschleudert werden.

Die Erfindung geht von einem vorbekannten Fahrzeug dieser Art aus (US-A-39 53 170). Bei diesem Fahrzeug ist der Kastenaufbau unbeweglich mit dem Fahrgestell verbunden und wird über die rückwärtige Schwenkklappe mit dem in der Längsführung laufenden Schubschild entladen. Solche Fahrzeuge vermeiden manche Nachteile von Kippern, insbesondere Hinterkippern, nämlich deren geringes Standvermögen bei hochgeschwenkter Ladefläche, sowie die im Fahrbetrieb auftretenden Geräuschbelästigungen und Gefahren durch Bedienungsfehler, die z. B. in der Leerfahrt dazu führen können, daß der Kastenaufbau unkontrolliert nach oben schwenken kann.

Bei dem vorbekannten Fahrzeug ist der Schubschild zwischen einer vorderen Stirnwand und der Schwenkklappe angeordnet. Das zwingt dazu, die Mehrfachzylinder-Kolbenanordnung teils im Raum zwischen dem Schubschild und der vorderen Stirnwand und teils im eigentlichen Laderaum unterzubringen. Das hiervon in Anspruch genommene Volumen des Kastenaufbaus steht für den Schüttguttransport nicht zur Verfügung. Da außerdem dieser Teil des Kastenaufbaus vorn liegt, wird die Hinterachse des Fahrzeuges stärker als die meistens als Antriebsachse dienende Hinterachse der Zugmaschine unter dem Sattel belastet. Insbesondere für den Haldentransport eignen sich solche Fahrzeuge schlecht, weil die Ladefähigkeit im Vergleich mit ihrem Aufbau zu gering und ihre Fahreigenschaften sowie ihre Standsicherheit ungünstig sind.

Der Erfindung liegt die Aufgabe zugrunde, das als bekannt vorausgesetzte Fahrzeug so auszubilden, daß sich seine Standsicherheit verbessert und daß die Abstützung der Mehrfachzylinder-Kolbenanordnung am Fahrzeug verbessert wird.

Gemäß der Erfindung wird diese Aufgabe dadurch gelöst, daß der Schubschild die andere Stirnwand des Kastens bildet und die im wesentlichen außerhalb des Kastenaufbaus liegende Mehrfachzylinder-Kolbenstangenanordnung sich auf einem mit dem Kasten verbundenen Abstützrahmen abstützt, wobei das Horizontalgelenk an einer Rahmentraverse angeordnet ist, die an konvergierenden Seitenteilen des Rahmens angebracht ist.

Gemäß der Erfindung werden die Eigensteifigkeit des Kastenaufbaus für den Fortfall der vorderen Stirnwand und der zwischen dem Fahrerhaus und der Kastenstirnseite vorhandene Platz für den Abstützrahmen genutzt. Dieser trägt die Reaktionskräfte der Mehrfachzylinder-Kolbenanordnung über seine Rahmentraverse und die konvergierenden Seitenteile ab und leitet sie in den Kastenaufbau als nach innen wirkende Kräfte ab, wenn das Schüttgut entleert wird. Erfindungsgemäß läßt sich der Schwerpunkt des beladenen Kastenaufbaus weiter nach vorn verlegen, wodurch der Sattel und über diesen die Hinterachse der Zugmaschine stärker belastet werden. Da man bei der beschriebenen Rahmenkonstruktion mit einer verhältnismäßig leichten Bauweise auskommt und die Mehrfachzylinder-Kolbenanordnung sich im wesentlichen außerhalb des Kastenaufbaus befindet, kann man praktisch das gesamte Kastenvolumen für den Schüttguttransport ausnutzen. ·

Im übrigen stellen Lademenge und Ladegewicht keine Grenze für die Anwendbarkeit der Erfindung dar. Deswegen können Sattelauflieger mit 50 t Nutzlast für Einsätze außerhalb öffentlicher Straßen verhältnismäßig billig gebaut werden. Dadurch verringern sich die Kosten der Haldenabfuhr um nahezu die Hälfte. Es wird daher auch der Ersatz von Schwer- und Schwerstlastwagen, deren außerordentlich hohe Anschaffungskosten bekannt sind, ermöglicht.

Ein weiterer Vorteil besteht darin, daß man gegebenenfalls trotz der verhältnismäßig geringen Standsicherheit des Aufbaus auf Haldenoberflächen auf eine Doppelbereifung und damit auf den größen Teil der bisher angefallenen Fahrbahnreinigung verzichten kann.

Jede Führung des Schubschildes besteht zweckmäßig aus einem Kastenprofil mit nach innen orientierter Öffnung und der betreffenden Seitenwand des Kastens anliegendem Boden; dabei ist vorzugsweise der Schubschild mit in den Kastenprofilen gehaltenen Blöcken versehen. Diese Blöcke können aus einem reibungsarmen Kunststoff bestehen.

Es erweist sich auch als zweckmäßig, das Schüttgut von den Kastenprofilen fernzuhalten. Das gelingt auf einfache Weise dadurch, daß die nach oben orientierten Längswände der Kastenprofile schräg nach den Seitenwänden und nach oben verlaufende Leitbleche aufweisen.

Hydraulische Antriebszylinder sollen bei einer zweckmäßigen Ausführungsform der Erfindung auch die Bewegungsenergie für die Schwenkklappe und für Riegelbolzen liefern, die in Ausnehmungen des Aufbaus und der Klappe eingreifen. Eine Differenzdruckschaltung steuert die Arbeitszylinder in der zeitlichen Abfolge, die für die Betätigung des Schubschildes, der Klappe und der Riegel vorgegeben wird.

Nicht immer ist aber ein solcher hydraulischer Antrieb eine optimale Lösung. Es kann nämlich vorkommen, daß die Differenzdruckschaltung zur vollständigen Öffnung der Klappe führt, bevor der Schubschild den Austrittsvorgang einleitet. In diesen Fällen fließt das Schüttgut ungleichmäßig aus. Nach dem Entladen führt der Klappenzylinder wegen der Differenzdruckschaltung die Klappe aus ihrer offenen Stellung unmittelbar in ihre geschlossene Stellung zurück, bevor der Schubschild zurückläuft. Das ist mit einer Unfallgefährdung verbunden. Arbeitskräfte, die den Austrittsvorgang und das Zurücklaufen des Schildes beobachten wollen, können nämlich unbeabsichtigt zwischen Klappe und Schild geraten.

Die Erfindung bietet die Möglichkeit, die be-schriebenen Nachteile einer Differenzdruck-schaltung für die Betätigung von Schubschild, Klappe und Verriegelung zu beseitigen und insbesondere die Voraussetzungen für einen verbesserten Entladevorgang und Unfallschutz zu schaffen, indem als Schwenkantrieb der Antrieb des Schubschildes dient, der auf seiner Innenseite Nocken trägt, deren Vorder- und Oberseiten nach vorn und oben gekrümmte Auflagerbahnen bilden, die die schwenkende Klappe auf ihrer Innenseite unterstützen, und daß die Klappenverriegelung am Aufbau angelenkte Fanghaken mit je einem zur vorderen Kappenstirnwand führenden Gestänge aufweist, welches mit dem Schild beim Einfallen des Fanghakens in einen klappenfesten Riegel zusammenwirkt und in Richtung der Riegelfreigabe vorgespannt ist.

Damit ergibt sich der Vorteil einer mechanischen Betätigung der Klappe und ihrer Verriegelung bzw. der Entriegelung, bei der die diesen Organen zuzuführenden Bewegungsenergien mit dem als Mehrfachteleskopzylinder ausgebildeten Schildantrieb beim Vorlauf des Schubschildes aufgebracht werden. Die dafür erforderliche größere Kraftentwicklung des Teleskopzylinders wird jedoch erst am Ende des Ausdrückvorganges zum Anheben der Klappe erforderlich. Vorher verbessert die entriegelte Klappe bei vielen Schüttgütern deren Entladung, weil sie mit ihrem Gewicht den Strom des ausfließenden Schüttgutes steuert, bevor sie von den Schubschildnocken angehoben wird. Der dazu erforderliche Kraftaufwand kann von dem dann weitgehend entlasteten Zylinder ohne weiteres aufgebracht werden. Mit Nocken lassen sich nicht nur der Zeitpunkt, sondern auch die Bewegungsabläufe der Klappe steuern, so daß man die Schließbewegung abbremsen und dadurch so gestalten kann, daß beim Vorlauf des Schildes eine Zeitvorgabe bis zum Schließen der Klappe erreicht wird, die als Unfallschutz ausnutzbar ist.

Die Gestänge können unter dem Rahmen enden und jeweils an eine Schwinge angeschlossen sein, wobei den Schwingen Arme zugeordnet sind, die der Längsführung des Schutzschildes dienen.

Im einzelnen kann dann vorgesehen werden, daß die Schwingen an ihren freien Enden je eine Rolle tragen, welche auf der Unterseite des betreffenden Armes reitet ; hierbei kann man so vorgehen, daß zur Vorspannung der Gestänge Zugfedern dienen, die am Aufbau und am Gestänge angelenkt sind. Bei diesen Ausführungsformen drückt der Schild zunächst die Ladung zusammen, bevor das Fanghakengestänge betätigt und die Klappe entriegelt wird. Das ist unbedenklich, weil das Gut im allgemeinen eine ausreichende Kompressibilität aufweist, um die Bewegung des Schildes in der zur Betätigung der Schwinge erforderlichen Größenordnung zuzulassen.

Auch die Klappenbetätigung läßt sich in diesem Zusammenhang verbessern und zwar dadurch, daß die Nocken kongruent ausgebildet und paarweise im seitlichen Abstand voneinander im Bereich der Oberkante des Schutzschildes befestigt sind, und daß die Drehgelenke der Klappe aus der Klappenebene nach hinten und oben versetzt am Aufbau angebracht sind.

Durch die Erfindung läßt sich noch ein weiterer Vorteil erzielen, wenn man die Längsführungen und die mit diesen zusammenwirkenden, am Schubschild festen Teile so ändert, daß bei der Betätigung des Schubschildes ein reibungsarmes Bewegungsablauf erzielt wird, was in einfachster Weise dadurch geschieht, daß die Längsführungen auf an den Ober- und Unterkanten der Seitenwände im Inneren des Kastens angeordnete Führungsleisten aufgeteilt sind und der Schubschild auf seiner Außenseite Arme aufweist, die mit einem oder mehreren an den Führungsleisten laufenden Fingern versehen sind.

Dadurch werden nämlich zusätzliche Öffnungen geschaffen, durch die das Schüttgut ausweichen kann. Durch die Verwendung von Führungsfingern werden die miteinander bei der Schildbewegung zusammenwirkenden Flächen verkleinert, wodurch die auf das Schüttgut ausgeübten Kräfte erheblich vergrößert und der die Reibung verstärkende Effekt des in die Führungen eingedrungenen Schüttgutes erheblich herabgesetzt wird. Diese Aufteilung der Längsführungen hat außerdem eine nach oben verlegte Teilführung zur Folge, die dort zur Abstützung des Kippmomentes des Schildes führt. Der Schild kann daher beim Rücklauf nicht mehr so leicht um eine horizontale Achse verkanten.

Aus verschiedenen Gründen ist außerdem eine mechanische Betätigung der Klappe und ihrer Verriegelung zweckmäßig, für die der mit dem erwähnten Mehrfachteleskopzylinder verwirklichte Schildantrieb beim Vorlauf des Schubschildes und damit bei der größten Kraftentwicklung des Teleskopzylinders ausgenutzt werden kann. Das setzt allerdings voraus, daß beim Rück- und Vorlauf des Schildes dessen Verkantung um eine senkrechte Achse ebenfalls ausgeschlossen wird. Das gelingt dadurch, daß die an den Unterkanten der Seitenwände angeordneten Führungsleisten für den jeweils zugeordneten Arm je eine Führungsbahn für Seitenführungsfinger und Stützfinger aufweisen.

Zweckmäßig wird der Schild an Profilen geführt, die Verkantungen des Schildes um seine Achsen ebenso ausschließen wie das Festsetzen von Schüttgut. Dabei ist einerseits vorgesehen, daß die an den Unterkanten der Seitenwände angeordneten Längsführungen nach innen offene Winkelprofile sind, deren Schenkel auf ihren Innenseiten die Führungsbahnen bilden. Andererseits verwirklicht man die Längsführungen so, daß die oberen Führungsleisten aus nach unten offenen Winkelprofilen bestehen, deren oberer Schenkel jeweils mit einem Leitblech abgedeckt ist, und daß die oberen Arme des Schildes mit je einem den oberen Schenkel des Winkelprofiles untergreifenden Führungsfinger versehen sind.

Bei dem durch die Erfindung verbesserten Fahrzeug sind die Gleitkörper der oberen Längsführungen als horizontale Führungsfinger aus Rundeisen ausgebildet, welche von den Armen unter die horizontalen Schenkel der oberen Winkel vorstehen und an den Enden der Arme sitzen. Die den unteren Führungswinkeln zugeordneten Gleitkörper bestehen ebenfalls aus Rundeisen. In jeder Gruppe ist ein sich auf dem Bodenschenkel abstützendes und ein weiteres Rundeisen vorgesehen, das sich auf dem Seitenschenkel des unteren Winkels führt. Obwohl diese Armanordnung den Vorteil hat, daß der Schubschild selbst für die Gleitkörper nicht ausgenommen zu werden braucht, ergeben sich praktische Schwierigkeiten. Es hat sich nämlich herausgestellt, daß trotz der hohen Flächenbelastungen der Gleitkörper infolge ihrer praktisch linienförmigen Berührung mit den Führungswinkeln der Schubschild zum Verkanten neigt und im übrigen ein vorzeitiger Verschleiß an den Rundeisen auftritt, der die Verkantungsneigung des Schubschildes nach längerem Betrieb noch erheblich verstärkt.

Man kann aber den Verschleiß der Gleitkörper herabsetzen und die Verkantungsneigung des Schubschildes an seinen Führungen ausschalten, wenn gemäß der Erfindung die Gleitkörper jeder Gruppe zu einer Baueinheit in einer Kufe zusammengefaßt sind, die sich auf dem Bodenschenkel des Winkelprofiles abstützt und derart angepaßt ist, daß ihre Seitenfläche ein geringes Spiel zum Seitenschenkel des Winkelprofiles aufweist, und daß jeder der den oberen Längsführungen zugeordnete Gleitkörper auf den Armen, die teilweise unter den Längsführungen und parallel zu diesen angeordnet sind, paarweise mit einem weiteren Gleitkörper angebracht ist und diese Gleitkörper als abgerundete Nocken ausgebildet sind, wobei einer der Gleitkörper jedes Paares am Ende des Armes und der andere neben dem Schild befestigt ist.

Der Verschleiß betrifft in erster Linie die unteren Gleitkörper, weil diese nicht nur das erhebliche Gewicht des Schubschildes, sondern auch die Kräfte übertragen müssen, welche von dem Schüttgut u. a. über das schräge Leitblech auf die Führungen übertragen werden. Die Kufen weisen verhältnismäßig geringe Flächenpressungen auf und lassen sich aus zähen Stählen herstellen, welche gegen Abtragungen infolge der Gleitbeanspruchungen relativ unempfindlich sind. Da andererseits die Kufen dazu neigen, auf Hindernisse, vor allem auf Teile des Schüttgutes, das auf den Führungswinkeln liegt, aufzugleiten, wird dieser Tendenz durch die Vermehrung der oberen Gleitkörper mit den den Schild an jeder Seite unter dem unteren Horizontalschenkel der oberen Längsführung abfangenden Nocken entgegenwirkt. Dadurch gelingt es, trotz geringer Flächenpressungen die Verkantungsneigungen des Schildes selbst dann auszuschalten, wenn die Kufen bis zu einem gewissen Grade verschlissen sind. Die Montage des Schubschildes in der auf diese Weise sehr eng ausgebildeten Führung macht dennoch keine Schwierigkeiten, weil sich der Schubschild bei geöffneter oder entfernter hinterer Klappe von hinten in die Mulde, d. h. in die Führung z. B. mit Hilfe eines Gabelstaplers einführen läßt.

Das seitliche Spiel der Kufen stellt man durch die Anpassung der Kufen an die jeweilige Mulde her, weil die Mulden hinsichtlich ihrer lichten Breite verhältnismäßig große Abweichungen voneinander zeigen. Deswegen ist es vorteilhaft, die Kufen mit seitlichen Konsolen des Schubschildes zu verbinden, beispielsweise zu verschweißen. Im allgemeinen kommt man mit einem kleinen Spiel von in der Größenordnung 5 mm aus.

Im folgenden wird die Erfindung anhand von lediglich Ausführungsbeispiele wiedergebenden Zeichnungen näher erläutert. Es zeigt

Figur 1 in Seitenansicht unter Fortlassung aller für das Verständnis der Erfindung nicht erforderlichen Einzelheiten einen Auflieger gemäß der Erfindung,

Figur 2 eine Draufsicht auf den Gegenstand der Fig. 2, wobei ausschließlich der Aufliegerteil gezeichnet ist,

Figur 3 in abgebrochener Darstellung den Aufbau im Querschnitt und

Figur 4 ein hydraulisches Schaltbild,

Figur 5 unter Fortlassung der Sattelzugmaschine einen Auflieger gemäß der Erfindung in Seitenansicht,

Figur 6 eine an der Mittellinie abgebrochene Darstellung der Klappe in Richtung des Pfeiles A der Fig. 5,

Figur 7 einen Schnitt längs der Linie III-III der Fig. 5.

Figur 8 in Seitenansicht, jedoch in abgebrochener Darstellung, d. h. unter Fortlassung aller für das Verständnis der Erfindung nicht erforderlichen Einzelheiten, einen Schubschild mit seinen Führungen in Seitenansicht,

Figur 9 eine Stirnansicht des Gegenstandes der Fig. 8,

Figur 10 eine Draufsicht auf den Gegenstand der Fig. 8 teilweise im Schnitt längs der Linie III-III der Fig. 8,

Figur 11 eine Einzelheit an der mit X bezeichneten Stelle der Fig. 9,

Figur 12 eine Einzelheit an der mit Z bezeichneten Stelle der Fig. 8,

Figur 13 eine Einzelheit an der mit Y bezeichneten Stelle der Fig. 8

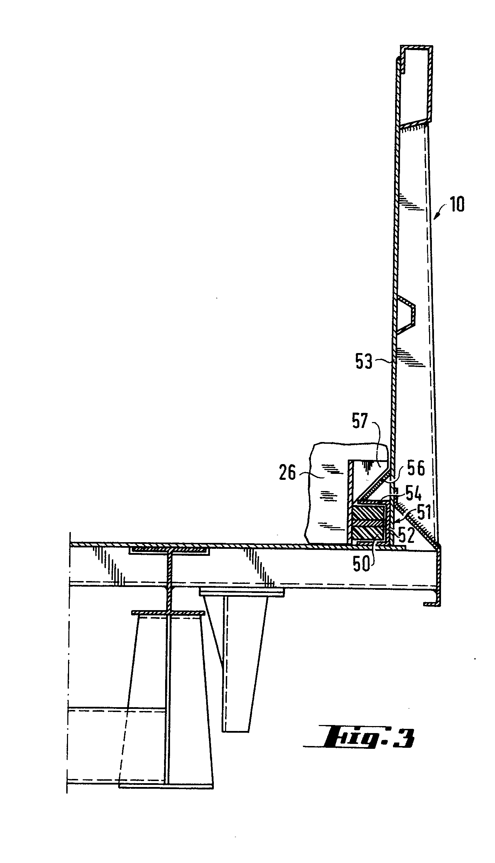

Auf dem Sattel 1 einer dreiachsigen Zugmaschine 2 befindet sich der Auflieger 3 mit einem selbsttragenden Aufbau 4, der an seinem rückwärtigen Ende bei 5 zur Aufnahme einer Doppelachse 6 bzw. 7 mit Einfachbereifung 8 bzw. 9 eingerichtet ist. Es handelt sich um einen Kastenaufbau, der gemäß der Draufsicht nach Fig. 2 parallele Längswände 10 bzw. 11 und einen ebenen Boden 12 auf zwei parallelen Längsträgern 13 bzw. 14 und mehreren Querträgern 15 aufweist. Der Kasten bildet somit einen selbsttragenden Aufbau. An seinem vorderen Ende trägt der Kasten einen allgemeinen mit 16 bezeichneten Rahmen. Dieser hat eine Traverse 17, konvergierende Seitenteile 18 bzw. 19 und parallele Rahmenglieder 20 bzw. 21, welche mit den konvergierenden Seitenteilen 18 und 19 sowie mit dem Kasten selbst verbunden sind. An der Traverse 17 ist über ein Horizontalgelenk 22 eine Mehrfachzylinderkolbenanordnung 23 angelenkt.

Das Ende der Kolbenstange 24 der Anordnung 23 sitzt seinerseits über einem Horizontalgelenk 25 in einem Schubschild 26, der die Stirnseite des Kastens bildet, dessen hintere Abschlußwand von einer schwenkbaren Klappe 28 gebildet wird.

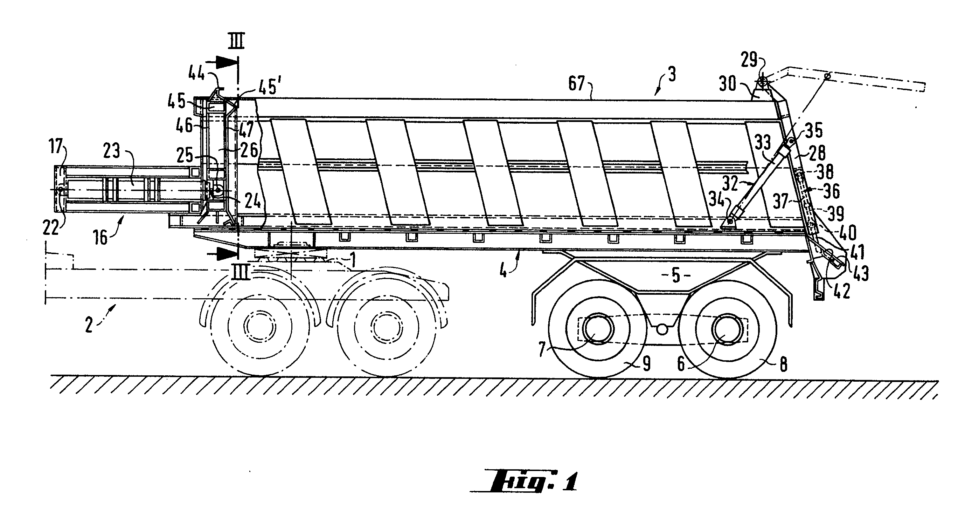

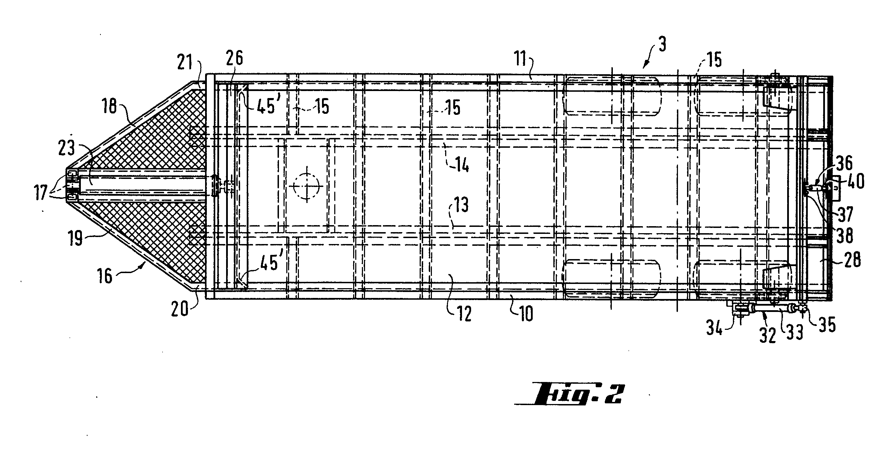

Diese Klappe 28 ist mit ihrer Oberkante an zwei seitlichen Gelenken 29 (Fig. 1) auf der Oberkante des Kastens bei 30 befestigt. Sie läßt sich ebenso wie die Zylinderkolbenanordnung 23 mit einer Zylinderkolbenanordnung 32 aus ihrer in ausgezogenen Linien in Fig. 1 wiedergegebenenen geschlossenen Stellung in die geöffnete und strichpunktiert wiedergegebene Stellung verschwenken. Dazu ist der Zylinder 33 an ein Horizontalgelenk 34 angelenkt, während die Kolbenstange über ein Horizontalgelenk 35 an die Klappe 28 angelenkt ist. Außerdem kann die Klappe mit einer weiteren hydraulischen Zylinderkolbenanordnung 36 verriegelt werden. Der Verriegelungszylinder 37 (Fig. 1) ist bei 38 an die Klappe 28 angelenkt, während seine Kolbenstangen 39 bei 40 an einen Verschlußbolzen 41 angelenkt ist, der in einer entsprechenden Ausnehmung 42 einer schräg nach unten gerichteten Fortsetzung 43 des Bodens einrasten kann.

Der Schubschild 26 besteht aus einem aus Hohlprofilen bestehenden rechteckigen Rahmen 45, der auf beiden Seiten mit je einem Blech 46 bzw. 47 belegt ist. Ein oberes Winkelprofil 44 dient als Stauleiste, d. h. als Wehr, das ein Überquellen des Schüttgutes über die Oberkante — (obere Rahmentraverse des Schubschildes 26) verhindert. Es ist mit einem im Querschnitt dreieckförmigen weiteren Profil 45' verbunden, das eine um den Schubschild 26 rahmenförmig umlaufende Stauleiste bildet, so daß der Schubschild 26 die Ladung an seiner Stirnseite zusammendrücken kann.

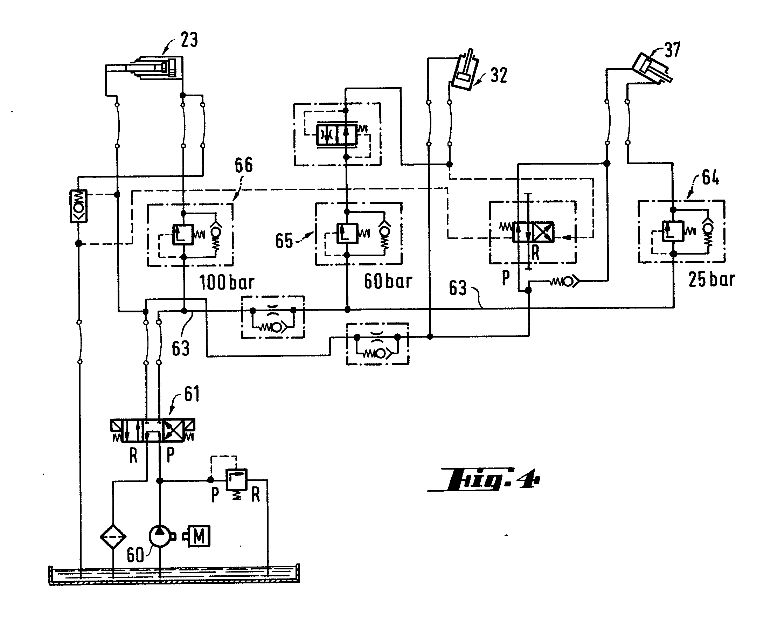

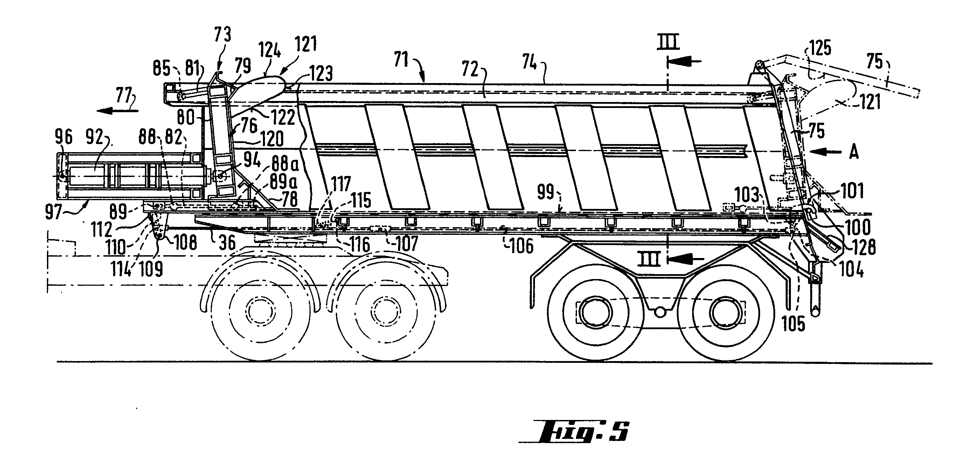

Der Schubschild 26 weist nach Fig. 3 unten an beiden Seiten je einen aus einem reibungsarmen Kunststoff bestehenden Block 50 auf. Der Block gleitet in einer Längsführung 51, welche von einem Kastenprofil gebildet wird, dessen Boden 52 mit dem Seitenblech 53 der betreffenden Seitenwand 10 des Aufbaus verbunden ist. Ein von der oberen Seitenwand 54 des Kastenprofils 51 von innen schräg nach aussen bis zur Seitenwand 10 verlaufendes Leitblech 56 dient zum Abweisen des Schüttgutes und wird von einem entsprechend geformten Blech 57 des Schubschildes 26 abgestrichen.

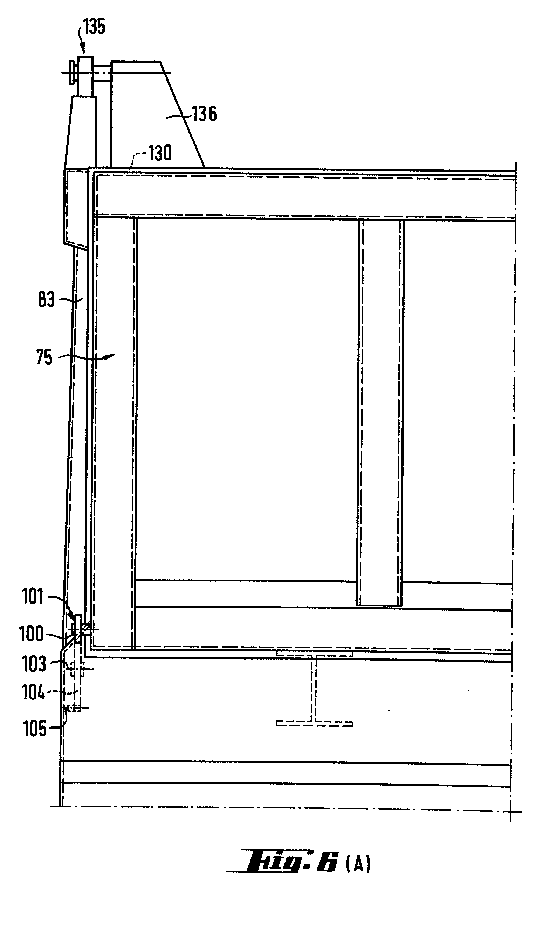

Die in Fig. 4 wiedergegebene Differenzdruckschaltung läßt erkennen, daß die verschiedenen Zylinderkolbenanordnungen so gesteuert werden, daß die Mehrfachzylinderkolbenanordnung 23 den Schubschild 26 nicht vor die geschlossene Rückwandklappe 28 fahren kann. Wenn nämlich die Pumpe 60 über das Zweiwegeventil 61 durchgeschaltet wird, baut sich zunächst in der Leitung 63 ein geringer Druck auf, der gemäß dem dargestellten Ausführungsbeispiel auf 25 bar steigen muß, ehe über die Schalt- und Sicherheitsventilanordnung 64 die Kolbenringfläche der Kolbenzylinderanordnung 37 beaufschlagt und der Entriegelungsbolzen herausgezogen wird. Bei weiterem Druckanstieg auf 60 bar wird dann durch die der Kolbenzylinderanordnung 32 zugeordnete Schaltung 65 die Klappe hochgeschwenkt, bevor durch Druckanstieg auf 100 bar, die der Mehrfachzylinder-Kolbenanordnung zugeordnete Steuerung 66 zum Ansprechen gebracht werden kann und den Schubschild 26 in Bewegung setzt.

Im Betrieb wird das Fahrzeug durch seine obere Öffnung 67 (Fig. 1) in herkömmlicher Weise beladen. Dabei ist die Rückwandklappe 28 geschlossen und der Schubschild 26 befindet sich in der Fig. 1 ersichtlichen vorderen Endstellung. Nach dem Beladen des Fahrzeuges wird der Transport durchgeführt. Am Ende des Transportes wird die in Fig. 4 wiedergegebene hydraulische Schaltung entsprechend den vorstehend beschriebenen Differenzdrucken betätigt, so daß zunächst die Verriegelung der Rückwandklappe 28 gelöst, sodann die Klappe aus ihrer in Fig. 1 wiedergegebenen Ausgangsstellung in die strichpunktiert wiedergegebene Endstellung hochgeschwenkt und schließlich der Schubschild 26 mit Hilfe der Mehrfachzylinder-Kolbenanordnung 23 von links nach rechts in der Darstellung der Fig. 1 in Bewegung gesetzt werden kann. Dabei wird die Ladung im Kasten 3 nach hinten über die Schrägfläche 41 herausgedrückt. Das Fahrzeug kann hierbei stehen oder sich nach vorn bewegen, um eine entsprechend der Entlade- und Fahrgeschwindigkeit mehr oder weniger dicke Schicht aufzutragen.

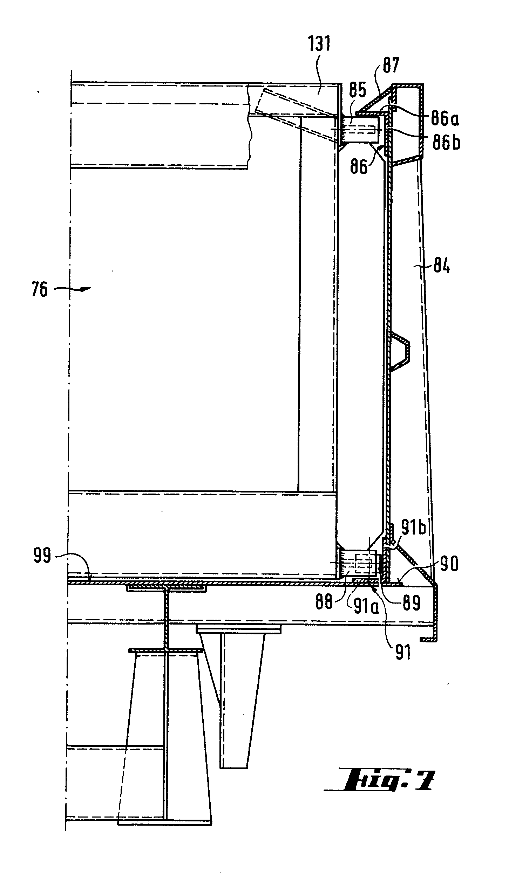

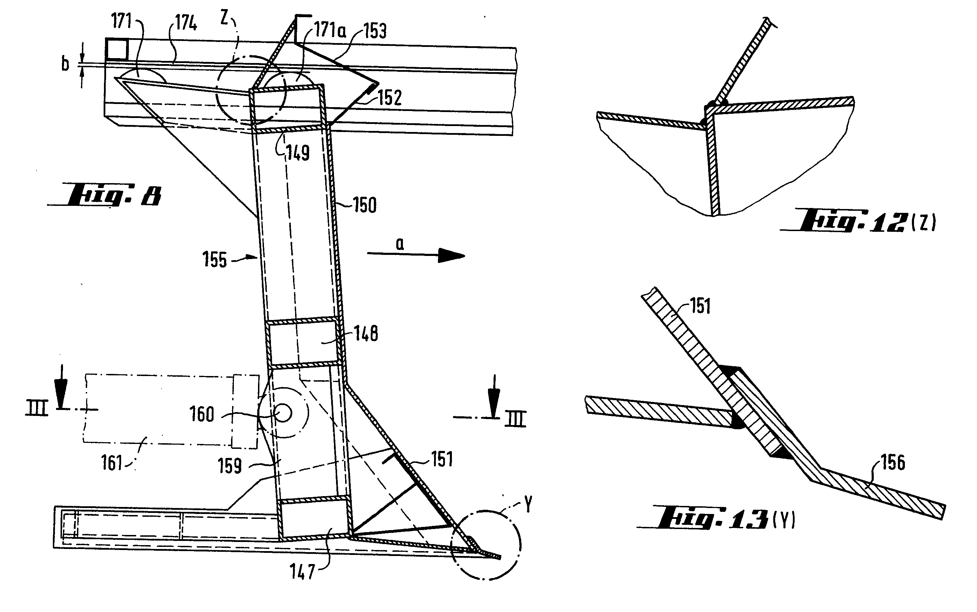

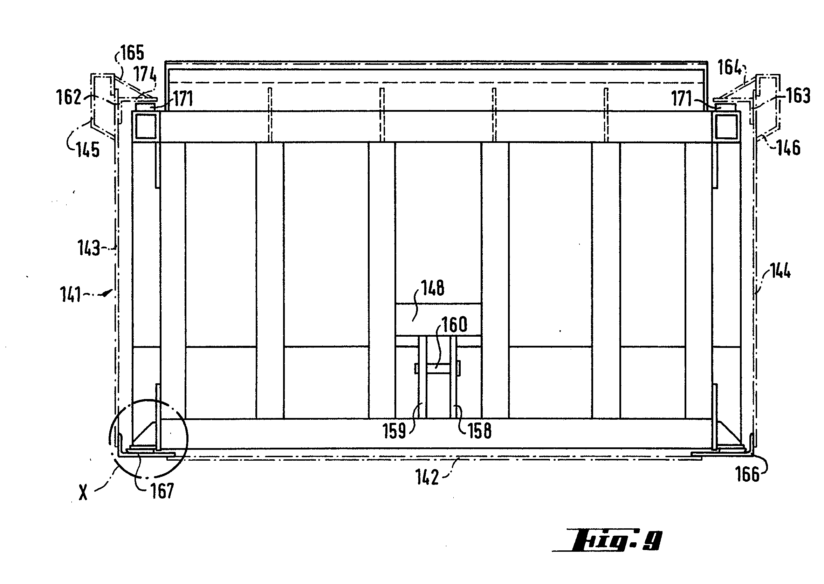

Gemäß Fig. 5 weist der dort dargestellte Auflieger 71 für den Schüttguttransport einen Kastenaufbau 72 und eine Entladevorrichtung 73 auf. Der Kasten ist oben bei 74 offen und kann daher mit den üblichen Ladegeräten beschickt werden. Die Entladevorrichtung arbeitet so, daß der Kasten 72 nicht gekippt zu werden braucht, wenn die Ladung nach hinten in Richtung auf die als schwenkbare Klappe 75 ausgebildete Stirnwand des als selbsttragender Aufbau ausgebildeten Kastens 72 entladen wird. Dieses Entladen erfolgt mit der der Klappe 75 gegenüberliegenden Kastenstirnwand, die als Schubschild ausgebildet und allgemein mit 76 bezeichnet ist. Dieser Schubschild ist mit seiner Hauptebene in Fahrtrichtung — Pfeil 77 — nach vorn von unten nach oben geneigt. Auf seiner Innenseite trägt der Schubschild vorspringende Leitbleche 78 bzw. 79, die das Gut zusammenhalten, so daß es bei dem Entladevorgang nicht nach oben ausweichen und durch die Öffnung 74 aus dem Kasten 72 herausgedrückt werden kann. Auf der Außenseite 80 und im Bereich jeder Seitenwand 83 bzw. 84 (Fig. 6 und 7) des Kastens 72 sind an dem Schubschild 76 Arme 81 bzw. 82 befestigt.

An dem freien Ende der oberen Arme 81 stehen nach Fig. 7 in Richtung auf die betreffende Seitenwand 84 je ein Rundeisen 85 vor, das unter einem Winkelprofil 86 läuft. Das Winkelprofil 86 stellt eine Längsführung dar und ist oben durch ein Schutzblech 87 abgedeckt. An den unteren Armen 82 sind ebenfalls in Richtung auf die jeweilige Seitenwand vorstehende Rundeisen 88 befestigt, die ebenso wie die Rundeisen 85 an den oberen Armen Führungsfinger bilden und mit horizontalen Rundeisen 89 zusammenwirken, welche der Seitenführung dienen. Die Längsführung für die Teile 88 und 89 an den unteren Armen 82 besteht ebenfalls aus einem Winkelprofil 91, das an der Unterkante 90 der betreffenden Seitenwand 84 befestigt ist.

Zum Antrieb des Schubschildes dient ein Mehrfachteleskopzylinder 92, der so angeordnet ist, daß die Kolbenflächen der Teleskope beaufschlagt sind, wenn der Schubschild 76 die Ladung des Kastens 72 ausdrücken soll. Der Anschluß des Schubschildes 76 an das Mehrfachteleskop 92 ist, wei bei 94 in Fig. 5 dargestellt, mit einem Gelenk verwirklicht ; ein entsprechendes Gelenk 96 dient als Widerlager und ist in einem Rahmen 97 angeordnet, welcher an der Schubschildseite des Kastens 72 angebracht ist und zum Abstützen der Kräfte dient.

An beiden Seiten des Kastenaufbaus und unter der Ladefläche 99 sowie innerhalb des Kastenprofils ist eine Verriegelung der Klappe 75 angeordnet. Wie Fig. 6 erkennen läßt, ist jede Seite der Klappe mit einem Riegel 100 versehen, der als Rundeisen seitlich von der Klappe 75 absteht und mit einem Fanghaken 101 zusammenwirkt. Dieser Fanghaken ist gemäß der Darstellung nach Fig. 5 seinerseits bei 103 an den Aufbau angelenkt und zweiarmig ausgebildet. Der andere Arm 104 ist bei 105 an ein Gestänge 36 angelenkt, das mit Hilfe eines Spannschlosses 107 auf bestimmte Längen eingestellt werden kann. Das Gestänge führt zum vorderen Ende des Kastenaufbaus, wo eine Konsole 108 angebracht ist, die ein Horizontalgelenk 109 für eine Schwinge 110 trägt. Das freie Ende der Schwinge 110 ist mit einer Rolle 112 bestückt, die von dem freien Ende des zugeordneten unteren Armes 82 betätigt werden kann, so daß das bei 114 angelenkte Gestängeende nach vorn gezogen wird. Das Gestänge ist andererseits mit einer Zugfeder 115 in Gegenrichtung belastet, die bei 116 an den Aufbau und bei 117 an das Gestänge 106 angeschlossen ist.

Auf der Innenseite 120 und im oberen Teil des in Seitenansicht etwa Z- bis S-förmig geformten oberen Leitbleches 79 befindet sich im Bereich jeder Seitenwand 83, 84 des Kastenaufbaus ein schubschildfester Nocken 121. Dieser Nocken hat eine im wesentlichen von unten nach oben ansteigende Unterseite 122, die bis zu einer schärferen Krümmung 123 eben verläuft. Die schärfere Krümmung 123 verläuft über die gesamte Stirnseite des Nockens und geht in die konvex gekrümmte Oberseite 124 über. Die beiden Nocken 121 wirken mit der Innenseite 125 der Klappe 75 zusammen, wie die im rechten Teil der Fig. 5 wiedergegebene, strichpunktierte Entleerungsstellung der Klappe erkennen läßt.

Im Betrieb und beim Beladen des Kastens 72 befindet sich der Schubschild 76 in der vorderen ausgezogenen, in Fig. 5 wiedergegebenen Stellung. Die Klappe 75 ist, wie im rechten Teil in Fig. 5 in ausgezogenen Linien wiedergegeben, geschlossen. Die Fanghaken 101 sind eingefallen und halten über die Riegel 100 die Klappe 75 in ihrer geschlossenen Stellung, weil die Rolle 112 des Kipphebels 110 sich auf der Unterseite der Arme 12 abstützt. In diesem Zustand ist die Feder 115 gespannt. Wenn das Fahrzeug beladen ist, kann es z. B. zu einer Halde fahren. Dort wird der Antrieb 92 betätigt. Hierbei ist die Klappe 75 noch geschlossen, jedoch führt die Anordnung der Rollen 112 an den vorderen Enden der Arme 82 dazu, daß nach einem geringen Schubweg des Schildes 76 die Rolle freigegeben und dadurch die Feder 115 in die Lage versetzt wird, unter Verschwenkung der Schwinge 110 das Gestänge 106 in der Darstellung der Fig. 5 nach rechts zu bewegen. Dadurch wird der Arm 104 entgegen dem Uhrzeigersinn verschwenkt und der Haken 101 gibt den Riegel 100 frei. Die weitere Bewegung des Schubschildes führt dann zum Gleiten der Ladung auf der Ladefläche 99 und dazu, daß das über ein schräges Leitblech 128 ausfließende Gut die Klappe 5 anhebt. Die Klappe 5 wirkt während des Ausdrückvorganges als Planierschild und dazu, daß der Ausfluß des Schüttgutes kontrolliert über das Leitblech 128 erfolgt.

Wenn der Schubschild 76 weit genug nach hinten gelaufen ist, erreichen seine Nocken 121 die Innenseite 125 der Klappe 75. Dadurch wird die Klappe 75 zwangsweise angehoben und erreicht, daß der Rest der Ladung vollständig ausgedrückt werden kann, weil sich die Klappe in der strichpunktierten Darstellung der Fig. 5 befindet. Damit ist der Entleerungsvorgang beendet.

Zur Wiederherstellung der Fahrbereitschaft wird der Schubschildantrieb 92 so betätigt, daß die Ringflächen der Teleskope beaufschlagt sind. Dadurch fährt der Schubschild 76 in seine vordere Endstellung. Bevor diese erreicht wird, gleitet die Innenseite 125 der Klappe auf den gekrümmten Bereichen 123 und 124 der Nocken 121, wodurch die Klappe gesteuert und entsprechend kontrolliert in ihre geschlossene Stellung zurückgeführt wird. Hierbei sind die Fanghaken 101 durch die Wirkung der Federn 115 in ihrer geöffneten Stellung gehalten. Wenn jedoch der Schubschild 76 seine vordere Stellung einnimmt, verschwenken seine Arme 82 über die Rollen 112, die Schwingen 110 und nehmen über das Gestänge 106 die Arme 104 mit, wodurch die Haken 101 in die Riegelstellung fallen.

Die Nocken 121 sind kongruent ausgebildet und im Bereich der Seitenkanten 130, 131 des Schutzschildes im seitlichen Abstand voneinander so angebracht, daß die obere Führungsbahn 124 etwas oberhalb der Oberkante der Kastenöffnung 74 steht. Die Klappe 75 ist an je ein Gelenk 135 mit Hilfe je einer Konsole 136 angeschlossen. Das Gelenk liegt ebenfalls oberhalb der Kastenöffnung 74, und die Konsolen 136 sind aus der Ebene der Klappe 75 nach oben und vorn abgewinkelt. Dadurch kann insbesondere der gekrümmte Bahnabschnitt 123 mit einem günstigen Übersetzungsverhältnis die Klappe öffnen und schließen.

Eine Verkantung des Schildes im Uhrzeigersinn gemäß der Darstellung der Fig. 5 wird durch die Abstützung der Führungsfinger 85 unter den oberen, horizontalen Schenkeln 86a der Winkelprofile 86 ausgeschlossen; im Gegenuhrzeigersinn dagegen durch die Finger 88 an den Armen 82. Zusammen mit den Fingern 88a stützen die Finger 88 den Schild außerdem auf dem horizontalen Schenkel 91a des Winkelprofiles 91 ab. Eine Verkantung des Schildes 76 um seine senkrechte Mittelachse schließen die Finger 89, 89a auf den Armen 82 wegen ihrer Abstützung auf den senkrechten Schenkeln 91b der Winkelprofile 91 aus. Auch die Stirnseiten der Führungsfinger 85 tragen durch ihre Abstützung auf den senkrechten Schenkeln 86b der oberen Winkelprofile 86 zu dieser Führung bei.

Die Führungsfinger 85, 88 und 88a sind mit Rundeisenabschnitten verwirklicht, die jeweils mit einer ihrer Stirnseiten an die Profile der Arme angeschweißt sind, während die ebenfalls aus Rundeisenabschnitten bestehenden Führungsfinger 89, 89a auf ihrer Zylinderfläche festgeschweißt sind.

In Fig. 9 ist strichpunktiert die Mulde 141 eines im einzelnen nicht dargestellten Lkw oder Lkw-Anhänger, insbesondere eines Aufliegers, im Querschnitt angedeutet. Sie hat einen Boden 142, dazu senkrechte Seitenwände 143 und 144 und ist im übrigen oben offen. Die oberen Längskanten sind außen mit Verstärkungsprofilen in Kastenform versehen, die bei 145 und 146 dargestellt sind. Eine solche Mulde kann von oben mit Schüttgütern beladen werden, wobei sich der Schubschild unmittelbar hinter dem Fahrerhaus des Lkw in seiner Ausgangsstellung befindet. Bei dem insbesondere aus der Darstellung der Fig. 8 und 9 erkennbaren Schubschild handelt es sich um eine aus Hohlträgern 147 bis 149 bestehende kastenartige Konstruktion. Diese ist an ihrer Schüttgutseite mit einem in der Schubschildebene verlaufenden mittleren Blech 150 versehen, an das ein unteres schräges Leitblech 151 ansetzt. Oben endet das Mittelblech 150 an einem ebenfalls geneigten Blech 152 mit einem Abschlußwinkel 153, der verhindert, daß das Schüttgut bei Bewegung des Schubschildes in der durch den Pfeil a in Fig. 8 bezeichneten Entleerungsrichtung nach oben aus der Mulde herausgedrückt wird. Das untere Leitblech 151 dient einerseits dazu, das Schüttgut im Bereich des Schubschildes 155 zwischen den Blechen 150 und 152 zu verdichten und andererseits die im Bodenbereich des Schubschildes auftretenden Kräfte in eine senkrechte Komponente umzuwandeln, die den an der Schüttgutseite von unten nach oben und hinten geneigten Schild in der unteren Führung hält. Wie die Fig. 11 erkennen läßt, ist das Leitblech 151 durch ein winkelförmiges Abstreiferblech 156 nach unten verlängert, welches das Zurückbleiben von feinem Fördergut verhindert.

Unterhalb der beiden kastenförmigen Hohlträger 147 und 148 des Schubschildes 155 liegt an der Rückseite eine Führungsgabel, deren beide Zinken 158 und 159 als Buchse eines Gelenkbolzens 160 dienen, mit denen ein in Fig. 8 strichpunktiert angedeuteter, mehrfach teleskopierbarer Hubzylinder 161 angeschlossen ist, der sich am stationären Teil des Aufbaus abstützt. Dieser Zylinder 161 bringt die Kräfte auf, die in den Schubschild beim Ausdrücken des Schüttgutes in Richtung des Pfeiles a bewegen und ihn nach der Entleerung der Mulde 141 in seine Ausgangsstellung zurückführen.

Diese Bewegungen des Schubschildes erfolgen in Führungen aus stationären und aus beweglichen Teilen.

Wie sich aus Fig. 9 ergibt, sind an den oberen Längskanten, d. h. neben den Verstärkungsprofilen 145 und 146 an der Innenseite der senkrechten Wände 143 und 144 der Mulde Winkelprofile 162, 163 befestigt. Jedes der Winkelprofile ist mit einem schrägen Blech 164, 165 nach oben abgedeckt, das das Abgleiten von Schüttgut über diesen Führungen in die Mulde bewirken soll. Da jede Seite des Schildes mit identischen Führungen versehen ist, genügt es, nur eine der Führungen näher zu erläutern.

Ergänzt wird die Führung des Schubschildes durch Winkelprofile 166, 167 welche in den unteren Ecken zwischen den Muldenseitenwänden 143, 144 und dem Boden 142 angeordnet sind.

Die beweglichen Teile sind als Gleitkörper ausgebildet.

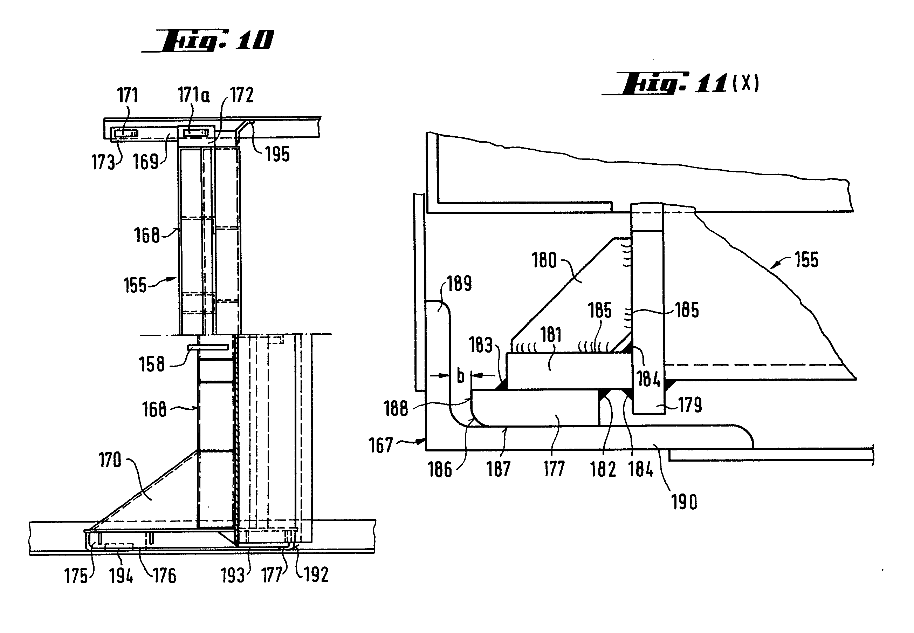

Wie insbesondere die Fig. 10 erkennen läßt, sind an der Rückseite 168 des Schubschildes 155 obere Arme 169 und untere Arme 170 angebracht. Jeder dieser Arme ist einer der seitlichen Führungen zugeordnet. Auf dem Arm 169 sitzt je ein Gleitkörper 171, 171a, so daß sich eine paarweise Anordnung ergibt. Der Gleitkörper 171 ist auf der Oberseite 172 des Schildes angebracht, während der mit ihm zusammenwirkende Gleitkörper 171 am freien Ende 173 des Armes 169 befestigt ist. Jeder Gleitkörper besteht aus einem abgerundeten, vorzugsweise halbzylindrischen Nocken, der mit seiner abgerundeten Seite dem oberen Schenkel 174 des zugeordneten Winkelprofiles 162, 163 zugeordnet ist, d. h. diesem gegenüber ein Spiel b aufweist, das etwa 5 mm beträgt. Dieses Spiel gilt für beide Gleitkörper 171 und 171a.

Der untere Arm 170 trägt an seinem freien Ende bei 175 eine Kufe 176, welche eine seitliche und eine Bodengleitführung in sich vereinigt. Ihr entspricht eine zweite Gruppe von Führungen, die ebenfalls in einer Kufe 177 miteinander vereinigt sind, die vor dem Schild 155 unterhalb des schrägen Leitbleches 151 angebracht ist. Die Einzelheiten sind aus der Darstellung der Fig. 11 ersichtlich. Danach befindet sich an dem äußeren seitlichen Träger bzw. Abschlußblech 179 des Schildes 155 ein Knotenblech 180 von allgemein dreieckförmiger Formgebung. Der untere horizontale Schenkel des Knotenbleches 180 trägt eine Konsole 181, auf der die eigentliche Kufe 177 durch Schweißnähte 182, 183 befestigt ist. Das Ganze ist als Schweißkonstruktion verwirklicht, so daß auch die Konsole 181 bei 184 und das Knotenblech 180 bei 185 verschweißt sind. Die Kufe 177 besitzt eine seitliche Rundung 176, die einen Übergang von der Bodenfläche 187 der Kufe in ihre seitliche Führungsfläche 188 darstellt. Zwischen dieser Fläche 188 und dem Seitenschenkel 189 des Winkelbleches 167, auf dessen Bodenschenkel 190 sich die Kufe 177 abstützt, befindet sich ebenfalls das Spiel b in einer Größenordnung von 5 mm.

Wie sich aus einem Vergleich der Fig. 10 und 11 ergibt, wird die Rundung 186 durch eine seitliche Rundung 192 ergänzt, und die eigentlichen seitlichen Führungsflächen 188 sind kürzer als die Ausdehnung der Kufe, weil diese seitliche Ausnehmungen 193 bzw. 194 aufweist.

Insgesamt gesehen ergibt sich dadurch eine sehr enge Führung des Schubschildes in den vier aus Winkelprofilen bestehenden Längsführungen. Diese Längsführungen sind am rückwärtigen Ende der Mulde offen, so daß der Schild von dieser Seite her eingeschoben werden kann, was unter Zuhilfenahme eines Gabelstaplers erfolgt.

Auch die seitlichen Führungen sind abgedeckt. Dazu dienen Abstreiferbleche, von denen eines bei 195 in Fig. 10 zu erkennen ist.

**Ansprüche**

1. Auflieger für Schüttguttransportfahrzeug, insbesondere Lkw, mit einem selbsttragenden, oben offenen Kastenaufbau (4, 72) dessen rückwärtige Stirnwand als Schwenkklappe (28) ausgebildet ist und einem Schubschild (26 ; 76), der in längs den Seitenwänden (10, 11) des Aufbaus angeordneten Längsführungen (51 ; 86, 91) läuft und mit Hilfe einer hydraulischen Mehrfachzylinder-Kolbenstangenanordnung (23 ; 92) angetrieben ist, die sich über ein Horizontalgelenk (22) an dem Aufbau abstützt, dadurch gekennzeichnet, daß der Schubschild (26) die andere Stirnwand des Kastens (3) bildet und die im wesentlichen außerhalb des Kastenaufbaus liegende Mehrfachzylinder-Kolbenstangenanordnung (23) sich auf einem mit dem Kasten (3) verbundenen Abstützrahmen (17-21) abstützt, wobei das Horizontalgelenk (22) an einer Rahmentraverse (17) angeordnet ist, die an konvergierenden Seitenteilen (18, 19) des Rahmens angebracht ist.

2. Auflieger nach Anspruch 1, dadurch gekennzeichnet, daß jede Führung (51) aus einem Kastenprofil mit nach innen orientierter Öffnung und der betreffenden Kastenwand (10) anliegendem Boden (52) besteht, und daß der Schubschild (26) in den Kastenprofilen (51) gleitende Blöcke (50) aufweist.

3. Auflieger nach Anspruch 1 oder 2, dadurch gekennzeichnet, daß die nach oben orientierte Längswand (54) jedes Kastenprofils (51) ein schräg nach den Seitenwänden (10) und nach oben verlaufendes Leitblech (56) aufweist.

4. Auflieger nach einem der Ansprüche 1 bis 3, dadurch gekennzeichnet, daß die schwenkbare Klappe (28) einen als Kolben-Zylinder-Anordnung ausgebildeten Schwenkantrieb (32) und eine Verriegelung (42) mit dem Kasten (3) aufweist, die als Kolben-Zylinder-Anordnung (36) ausgebildet ist, wobei der Antrieb (23) des Schubschildes (26) mit Hilfe einer Differenzdruckschaltung mit den Kolben-Zylinder-Anordnungen (32, 36) der Rückwandklappe (28) verbunden ist.

5. Auflieger nach den Ansprüchen 1 bis 4, dessen Klappe mit einem Schwenkantrieb versehen ist und eine Verriegelung mit dem Kasten aufweist, dadurch gekennzeichnet, daß als Schwenkantrieb der Antrieb (92) des Schubschildes (76) dient, der auf seiner Innenseite (120) Nocken (121) trägt, deren Vorder- und Oberseiten (123, 124) nach vorn und oben gekrümmte Auflagerbahnen bilden, die die schwenkende Klappe (75) auf ihrer Innenseite (125) unterstützen, und daß die Klappenverriegelung am Aufbau angelenkte Fanghaken (101) mit je einem zur vorderen Kastenstirnwand führenden Gestänge (106) aufweist, welches mit dem Schild (76) beim Einfallen des Fanghakens (101) in einen klappenfesten Riegel (100) zusammenwirkt und in Richtung der Riegelfreigabe vorgespannt ist.

6. Auflieger nach Anspruch 5, dadurch gekennzeichnet, daß die Gestänge (106) unter dem Rahmen (97) enden und jeweils an eine Schwinge (110) angeschlossen sind, wobei den Schwingen Arme (112) zugeordnet sind, die der Längsführung des Schutzschildes (76) dienen.

7. Auflieger nach den Ansprüchen 5 oder 6, dadurch gekennzeichnet, daß die Schwingen (110) an ihren freien Enden je eine Rolle (112) tragen, welche auf der Unterseite des betreffenden Armes (82) reitet.

8. Auflieger nach einem der Ansprüche 8 bis 7, dadurch gekennzeichnet, daß zur Vorspannung der Gestänge (106) Zugfedern (115) dienen, die am Aufbau (72) und am Gestänge (106) angelenkt sind.

9. Auflieger nach einem der Ansprüche 5 bis 8, dadurch gekennzeichnet, daß die Nocken (121) kongruent ausgebildet und paarweise im seitlichen Abstand voneinander im Bereich der Oberkante des Schutzschildes (76) befestigt sind, und daß die Drehgelenke der Klappe (75) aus der Klappenebene nach hinten und oben versetzt am Aufbau (72) angebracht sind.

10. Auflieger nach den Ansprüchen 1 bis 9, dadurch gekennzeichnet, daß die Längsführungen (86, 91) auf an den Ober- und Unterkanten (92) der Seitenwände (83, 84) im Inneren des Kastens (72) angeordnete Führungsleisten aufgeteilt sind und der Schubschild (76) auf seiner Außenseite (80) Arme (81, 82) aufweist, die mit einem oder mehreren an den Führungsleisten (86, 91) laufenden Fingern (85, 88, 89) versehen sind.

11. Auflieger nach Anspruch 10, dadurch gekennzeichnet, daß die an den Unterkanten (92) der Seitenwände (83, 84) angeordneten Führungsleisten (94) für den jeweils zugeordneten Arm (82) je eine Führungsbahn für Seitenführungsfinger und Stützfinger aufweisen.

12. Auflieger nach den Ansprüchen 10 oder 11, dadurch gekennzeichnet, daß die an den Unterkanten (92) der Steinwände (83, 84) angeordneten Längsführungen (91) nach innen offene Winkelprofile sind, deren Schenkel auf ihren Innenseiten die Führungsbahnen bilden.

13. Auflieger nach den Ansprüchen 10 bis 12, dadurch gekennzeichnet, daß die oberen Führungsleisten (86) aus nach unten offenen Winkelprofilen bestehen, deren oberer Schenkel (86a) jeweils mit einem Leitblech (87) abgedeckt ist, und daß die oberen Arme des Schildes (76) mit je einem den oberen Schenkel (86a) des Winkelprofils (86) untergreifenden Führungsfinger (85) versehen sind.

14. Auflieger nach einem oder mehreren der Ansprüche 1 bis 13, bei dem in den unteren Ecken zwischen Muldenseitenwänden und -boden nach oben offene Winkelprofile (166, 164) und an den oberen Längskanten der Muldenseitenwände (146, 144) nach unten offene Winkelprofile (162, 163 als untere und obere Längsführungen für mit den Profilen zusammenwirkende Gleitkörper (171, 174) vorgesehen sind, welche für jede untere Längsführung je eine Gruppe bilen, von der die eine neben einem schrägen Leitblech (151) des Schubschildes (155) angebracht ist und die andere an einem nach der anderen Seite vorstehenden Arm (170) sitzt, wobei der Schubschild (151) je einen oberen Arm (169) mit wenigstens einem auf ihm angeordneten Gleitkörper (171) für die beiden oberen Längsführungen (162, 163) aufweist, dadurch gekennzeichnet, daß die Gleitkörper jeder Gruppe zu einer Baueinheit in einer Kufe (176, 177) zusammengefaßt sind, die sich auf dem Bodenschenkel (190) des Winkelprofiles (166, 167) abstützt und derart angepaßt ist, daß ihre Seitenfläche (188) ein geringes Spiel zum Seitenschenkel (187) des Winkelprofiles (166, 167) aufweist, und daß jeder der den oberen Längsführungen (162, 163) zugeordneten Gleitkörper auf den Armen (169) die teilweise unter den Längsführungen (162, 163) und parallel zu diesen angeordnet sind, paarweise mit einem anderen Gleitkörper (171, 171a) angebracht ist und diese Gleitkörper als abgerundete Nocken ausgebildet sind, wobei einer der Gleitkörper jedes Paares (171, 171a) am Ende (173) des Armes (169) und der andere neben dem Schild (168) befestigt ist.

15. Auflieger nach Anspruch 14, dadurch gekennzeichnet, daß die neben dem schrägen Leitblech angebrachten Kufen (176, 177) an seitlichen Konsolen (181) des Schildes (168) befestigt sind.

16. Auflieger nach Anspruch 14 oder 15, dadurch gekennzeichnet, daß zwischen den abgerundeten Nocken und den oberen Führungen (162, 163) ein Spiel vorgesehen ist, das dem Spiel der Kufen (176, 177) entspricht.

**Claims**

1. Semitrailer body for a bulk material transport vehicle, in particular a lorry, with a self-supporting box superstructure open at the top (4, 72), the rear end wall of which is configured as a hinged tailboard (28), and with a thrust plate (26) that runs in longitudinal guides (51, 86, 91) disposed along the side walls (10, 11) of the superstructure and is impelled by means of an hydraulic multiple-cylinder piston rod installation (23, 92) which is braced to the superstructure via a horizontal coupling (22), characterized by the fact that the thrust plate (26) forms the other end wall of the box body (3), and the multiple-cylinder piston rod installation (23), located essentially outside the box superstructure, is supported by a support frame (17-21) joined to the box body (3), in which arrangement the horizontal coupling (22) is fitted to a frame cross-tie (17) which is attached to converging side-panel end plates (18, 19) of the frame.

2. Semitrailer body in accordance with Claim 1, characterized by the fact that each guide (51) consists of a channel section with its openside facing inwardly and with its bottom adjacent the corresponding box-body wall, and the thrust plate (26) comprises blocks (50) sliding in the box sections (51).

3. Semitrailer body in accordance with Claim 1 or 2, characterized by the fact that the upwardly facing longitudinal wall (54) of each channel section (51) includes a sheet-metal deflector (56) sloping upwardly towards the side walls (10).

4. Semitrailer body in accordance with one of Claims 1 to 3, characterized by the fact that the hinged tailboard (28) includes a pivoting drive mechanism (32) comprising a piston/cylinder installation, and a locking mechanism (42) with the box body, which comprises a piston/cylinder installation, and the drive (23) for the thrust plate (26) is connected with the piston/cylinder installations (32, 36) of the rear-wall tailboard (28) by means of a differential pressure control.

5. Semitrailer body in accordance with Claims 1 to 4, the tailboard of which is provided with a pivoting drive mechanism and includes a locking mechanism with the box body, characterized by the facts that the drive (92) of the thrust plate (76) serves as pivoting drive mechanism, carrying on its inner side (120) cams (121) the leading and upper sides (123 and 124 of which form support tracks inclined forwardly and upwardly, which support the pivoting tailboard (75) on its inner side, and that the tailboard locking mechanism on the superstructure includes pivoting catch hooks (101) each with one linkage (106), leading to the forward end wall of the box body, which acts together with the plate (76) when the catch hook (101) falls into place in a fixed-hinge locking bar (100) and is pre-stressed in the direction of release of the bar.

6. Semitrailer body in accordance with Claim 5, characterised by the fact that the linkages (106) terminate under the frame (97) and at any given time are connected to a rocker arm, and at the same time arms (112) are directed to the rocker arms providing longitudinal guidance for the thrust plate (76).

7. Semitrailer body in accordance with Claims 5 or 6, characterized by the fact that the rocker arms (11) each carry at their free ends a roller (112) which rides on the lower side of the corresponding arm (82).

8. Semitrailer body in accordance with one of Claims 8 to 7, characterized by the fact that tension springs (115) serve for the pre-stressing the linkages (106), the springs being hinged at the superstructure (72) and at the linkage (106).

9. Semitrailer body in accordance with one of Claims 5 to 8, characterized by the facts that the cams (121) are similarly shaped and are fixed as a pair in lateral separation from each other in the area of the upper edge of the thrust plate (76), and that the hinge joints of the tailboard (75) are attached on the superstructure (72) in a manner displaced rearwardly and upwardly from the plane of the tailboard.

10. Semitrailer body in accordance with Claims 1 to 9, characterized by the fact that the longitudinal guides (86, 91) comprise guide grooves fitted to the upper and lower edges (92) of the side walls (83, 84) in the interior of the box body (72) and the thrust plate (76) includes arms (81, 82) on its outer side (80) which are provided with one or several fingers (85, 88, 89) running in the guide grooves (86, 91).

11. Semitrailer body in accordance with Claim 10, characterized by the fact that the guide grooves (94) fitted at the lower edges (92) of the side walls (83, 84) include, for the arm (82) engaged at any given time, one guide track each for lateral guide finger and supporting finger.

12. Semitrailer body in accordance with Claims 10 or 11, characterized by the fact that the longitudinal guides (91) fitted at the lower edges (92) of the side walls (83, 84) are angle sections open towards the inside, whose sidepieces, on their inner sides, form the guide tracks.

13. Semitrailer body in accordance with Claims 10 to 12, characterized by the facts that the upper guide grooves (86) consist of angle sections open towards the bottom, the upper sidepiece (86a) of which is covered at any given time by a sheet metal deflector (87), and that the upper arms of the plate (76) are each provided with a guide finger (85) which engages under the upper sidepiece (86a) of the angle section (86).

14. Semitrailer body in accordance with one or several of Claims 1 to 13, in which, in the lower corners between the side walls and the bottom of the container, angle sections (166, 164) open towards the top are provided, and, at the upper longitudinal edges of the side walls (146, 144) of the container, angle sections open towards the bottom are provided, as lower and upper longitudinal guides for sliding members (171, 174) operating together with the sections, which, for each lower longitudinal guide, form one group apiece, of which the one is attached next to a sloping sheet metal deflector (151) of the thrust plate (155) and the other rests against an arm (170) protruding towards the other side, whereby the thrust plate (151) includes an upper arm (169), with at least one sliding member (171) fitted to it, for each of the two upper longitudinal guides (162, 163), characterized by the fact that the sliding members of each group are assembled as a structural unit in a runner (176, 177) which is supported on the bottom sidepiece (190) of the angle section (166, 167) and is shaped to fit in such a way that its lateral surface (188) has slight play relative to the lateral sidepiece (187) of the angle section (166, 167), and that each of the sliding members, directed to the upper longitudinal guides (162, 163), on the arms (169), which are disposed in part underneath the longitudinal guides (162, 163) and parallel to the latter, are mounted in a pair with another sliding member (171, 171a) and these sliding members are configured as rounded cams, in which arrangement one of the sliding members of each pair (171, 171a) is fixed at the end (173) of the arm (169) and the other next to the plate (168).

15. Semitrailer body in accordance with Claim 14, characterized by the fact that the runners (176, 177) fitted next to the sloping sheet metal deflector are fixed to lateral brackets (181) of the plate (168).

16. Semitrailer body in accordance with Claim 14 or 15, characterized by the fact that between the rounded cams and the upper guides (162, 163) a degree of play is provided that corresponds to the play of the runners (176, 177).

## Revendications

1. Semi-remorque pour transporter des matériaux en vrac au moyen d'un engin de traction, en particulier un camion, comprenant une caisse (4, 72) autonome et ouverte vers le haut, dont la paroi frontale arrière est constituée sous forme d'un volet pivotant (28), et une plaque de poussée (26) qui circule dans des dispositifs de guidage longitudinaux (51, 86, 91) disposés le long des parois latérales (10, 11) de la structure de la caisse et qui est entraînée par un vérin hydraulique à étages multiples (23, 92) qui s'appuie, par l'intermédiaire d'une articulation horizontale (22), à la structure de la caisse, caractérisée en ce que la plaque de poussée (26) constitue l'autre paroi frontale de la caisse (3) et en ce que le vérin à étages multiples (23) qui est situé essentiellement à l'extérieur de la structure de la caisse s'appuie sur un cadre de support (17-21) qui est relié à la caisse (3), l'articulation horizontale (22) étant montée sur une traverse (17) d'un cadre qui est fixée aux côtés latéraux convergents (18, 19) du cadre.

2. Semi-remorque selon la revendication 1, caractérisée en ce que chaque dispositif de guidage (51) est constitué par un profilé en U ayant son ouverture orientée vers l'intérieur et dont le fond (52) s'applique contre la paroi correspondante (10) de la caisse, et en ce que la plaque de poussée (26) comprend des blocs (50) glissant dans les profilés en U (51).

3. Semi-remorque selon la revendication 1 ou 2, caractérisée en ce que la paroi longitudinale (54) orientée vers le haut de chaque profilé en U (51) comprend une tôle déflectrice (56) allant en oblique en direction des parois latérales (10) et vers le haut.

4. Semi-remorque selon l'une des revendications 1 à 3, caractérisée en ce que le volet pivotant (28) comprend un mécanisme de pivotement (32) constitué par des vérins et un dispositif de verrouillage (42) qui le verrouille à la caisse (3) et qui est constitué par des vérins (36) le mécanisme d'entraînement (23) de la plaque de poussée (26) étant relié par un circuit à pressions différentielles aux vérins (32, 36) du volet formant la paroi arrière (28).

5. Semi-remorque selon les revendications 1 à 4, dont le volet est muni d'un mécanisme d'entraînement en pivotement et d'un dispositif de verrouillage avec la caisse, caractérisée en ce que le mécanisme de pivotement est constitué par le mécanisme d'entraînement (32) de la plaque de poussée (76), qui porte sur son côté interne (120) des butées ou cames (121) dont les côtés avant et supérieurs (123, 124) constituent des surfaces d'appui incurvées avant et supérieures, qui supportent le volet pivotant (75) par son côté interne (125), et en ce que le verrouillage du volet sur la structure de la caisse comprend des crochets articulés (101) munis chacun d'une tringle (106) allant jusqu'à la paroi frontale avant de la caisse, tringle qui coopère avec la plaque de poussée (76) lorsque le crochet (101) accroche un verrou (100) solidaire du volet, et qui est soumise à une précontrainte en direction de la libération du verrou.

6. Semi-remorque selon la revendication 5, caractérisée en ce que les tringles (106) se terminent sous le cadre (97) en étant raccordées respectivement à une bielle (110), les bielles étant associées à des bras (112) servant au guidage longitudinal de la plaque de poussée (76).

7. Semi-remorque selon la revendication 5 ou 6, caractérisée en ce que les bielles (110) portent respectivement à leur extrémité libre un galet (112) qui circule sur le côté inférieur du bras correspondant (82).

8. Semi-remorque selon l'une des revendications 5 à 7, caractérisée en ce que la précontrainte appliquée aux tringles (106) est obtenue par des ressorts de traction (115) qui sont articulés à la structure (72) de la caisse et aux tringles (106).

9. Semi-remorque selon l'une des revendications 5 à 8, caractérisée en ce que les butées ou cames (121) sont constituées de façon analogue et sont fixées de manière à faire une paire et à une certaine distance latérale l'une de l'autre dans la zone du bord supérieur de la plaque de poussée (76) et en ce que les articulations de rotation du volet (75) sont disposées en dehors du plan du volet sur la structure (72) de la caisse, en étant décalées vers l'arrière et vers le haut.

10. Semi-remorque selon l'une des revendications 1 à 9, caractérisée en ce que les dispositifs de guidage longitudinaux (86, 91) sont subdivisés en bandes de guidage disposées sur les côtés supérieurs et inférieurs (92) des parois latérales (83, 84) à l'intérieur de la caisse (72) et en ce que la plaque de poussée (76) comprend sur son côté extérieur (80) des bras (81, 82) qui sont munis d'un ou plusieurs doigts (85, 88, 89) qui circulent sur les bandes de guidage (86, 91).

11. Semi-remorque selon la revendication 10, caractérisée en ce que les bandes de guidage (94) disposées sur les bords inférieurs (92) des parois latérales (83, 84) et destinées au bras respectif (82) qui leur est associé comprennent respectivement une piste de guidage pour des doigts de guidage latéraux et pour des doigts de support.

12. Semi-remorque selon la revendication 10 ou 11, caractérisée en ce que les dispositifs de guidage longitudinaux (91) disposés sur les bords inférieurs (92) des parois latérales (83, 84) sont constitués par des profilés en L ouverts vers l'intérieur, dont les branches forment sur leurs côtés internes les pistes de guidage.

13. Semi-remorque selon les revendications 10 à 12, caractérisée en ce que les bandes de guidage supérieures (86) sont constituées par des profilés en L ouverts vers le bas, dont la branche supérieure (86a) est recouverte respectivement par une tôle déflectrice (87) et en ce que les bras supérieurs de la plaque de poussée (76) sont munis respectivement d'un doigt de guidage (85) passant par le dessous de la branche supérieure (86a) du profilé en L (86).

14. Semi-remorque selon une ou plusieurs des revendications 1 à 13, dans laquelle sont prévus des profilés en L (166, 167) aux coins inférieurs entre les parois latérales de la benne et le fond de la benne, s'ouvrant vers le haut, et des profilés en L (162, 163) sur les bords longitudinaux supérieurs des parois latérales (143, 144) de la benne, s'ouvrant vers le bas, constituant des dispositifs de guidage longitudinaux inférieurs et supérieurs pour des corps de glissement (171, 174) coopérant avec les profilés, ces corps de glissement formant respectivement, pour chaque dispositif de guidage longitudinal inférieur, un groupe dont l'un est monté à proximité d'une tôle déflectrice en oblique (151) de la plaque de poussée (155) et dont l'autre repose sur un bras (170) en saillie sur l'autre côté, la plaque de poussée (155) comprenant respectivement un bras supérieur (169) avec au moins un corps de glissement (171) monté sur lui et destiné aux deux dispositifs de guidage supérieurs (162, 163), caractérisée en ce que les corps de glissement de chaque groupe sont rassemblés en unités constituant des patins (176, 177), qui s'appuient sur la branche inférieure (190) du profilé en L (166, 167) et qui sont adaptés de manière que leur surface latérale (188) présente un léger jeu par rapport à la branche latérale (187) du profilé en L (166, 167) et en ce que chacun des corps de glissement qui sont associés aux dispositifs de guidage longitudinaux supérieurs (162, 163) est monté en formant une paire avec un autre corps de glissement (171, 171a) sur les bras (169) qui sont disposés partiellement au-dessous des dispositifs de guidage longitudinaux (162, 163) et parallèles à ceux-ci, et en ce que ces corps de glissement sont constitués sous forme de butées arrondies, l'un des corps de glissement de chaque paire (171, 171a) étant fixé à l'extrémité (173) du bras (169) et l'autre à proximité de la plaque de poussée (168).

15. Semi-remorque selon la revendication 14, caractérisée en ce que les patins (176, 177) disposés à proximité de la tôle déflectrice en oblique sont montés sur des consoles latérales (181) de la plaque de poussée (168).

16. Semi-remorque selon la revendication 14 ou 15, caractérisée en ce qu'un certain jeu est prévu entre les butées arrondies et les dispositifs de guidage supérieurs (162, 163) correspondant au jeu des patins (176, 177).

**Fig. 1**

0 012 227

**Fig. 2**

**Fig. 3**

Fig. 4

23

32

37

66

65

64

100 bar

60 bar

63

P

25 bar

63

61

R     P

P     R

60

M

0 012 227

Fig. 5

0 012 227

_Fig. 6_ (A)

Fig. 7

Fig. 8

Fig. 12 (Z)

Fig. 13 (Y)

0 012 227

Fig. 9

Fig. 10

Fig. 11 (X)

0 012 227